(19) Europäisches Patentamt
European Patent Office
Office européen des brevets

(11) Veröffentlichungsnummer: **0 023 601**
**B1**

(12) # EUROPÄISCHE PATENTSCHRIFT

(45) Veröffentlichungstag der Patentschrift: **15.06.83**

(21) Anmeldenummer: **80103945.4**

(22) Anmeldetag: **10.07.80**

(51) Int. Cl.³: **D 06 P 1/18**, D 06 P 3/60, D 06 P 3/85, C 09 B 29/36

(54) **Verfahren zum Färben und Bedrucken von cellulosehaltigem Textilmaterial.**

(30) Priorität: **23.07.79 DE 2929763**

(43) Veröffentlichungstag der Anmeldung: **11.02.81 Patentblatt 81/6**

(45) Bekanntmachung des Hinweises auf die Patenterteilung: **15.06.83 Patentblatt 83/24**

(84) Benannte Vertragsstaaten: **CH DE FR GB IT LI**

(56) Entgegenhaltungen:
**FR-A-2 351 157**
**GB-A-1 559 001**
**GB-A-2 011 483**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Loeffler, Hermann, Haydnstrasse 23, D-6720 Speyer (DE)**
Erfinder: **Juenemann, Werner, Dr., Haidfeldweg 1C, D-6702 Bad Duerkheim 1 (DE)**
Erfinder: **Lamm, Gunther, Dr., Heinrich-Heine-Strasse 7, D-6733 Hassloch (DE)**

**EP 0 023 601 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zum Färben und Bedrucken von cellulosehaltigem Textilmaterial

Die DE-C-1 811 796 betrifft ein Verfahren zum Färben von Cellulosefasern oder Gemischen derselben mit synthetischen Fasern unter Verwendung von Glykolen oder Gykolderivaten, die eine gewisse Wasserlöslichkeit aufweisen, als Farbstofflösungsmittel, das dadurch gekennzeichnet ist, daß man in Wasser quellbare Cellulosefasern oder mindestens diesen Bestandteil eines Gemisches derselben mit synthetischen Fasern färbt, indem man die Cellulosefasern bzw. das Gemisch gleichzeitig oder in beliebiger Reihenfolge mit

(1) Wasser in genügender Menge, um die Cellulosefasern quellen zu lassen,

(2) einem Farbstoff, der keine wasserlöslichmachenden Gruppen enthält und dessen gesättigte Lösung in siedender 0,1molarer wäßriger Natriumcarbonatlösung bei der Wellenlänge der maximalen Absorption eine Extinktion von höchstens 9,8 aufweist, wenn die Extinktion durch 10faches Verdünnen der siedenden gesättigten Lösung mit Triäthylenglykoldimethyläther, Messen der Absorption der verdünnten Lösung und Berechnung der Extinktion der gesättigten siedenden Lösung nach dem Beerschen Gesetz bestimmt wird, in ausreichender Menge, um die Cellulosefasern zu färben, und

(3) einem Lösungsmittel, das gegebenenfalls einen Lösungsvermittler für den Farbstoff enthält, in ausreichenden Mengen behandelt, um die Quellung der Cellulosefasern aufrechtzuerhalten, wenn das Wasser entfernt wird, wobei das Lösungsmittel

(a) zu mindestens 2,5 Gewichtsprozent bei 25° C in Wasser löslich ist,

(b) bei Atmosphärendruck oberhalb 150° C siedet,

(c) bei einer Temperatur im Bereich von etwa 0 bis 225° C ein Lösungsmittel für den Farbstoff ist

(d) die allgemeine Formel

$$R\left(O-\underset{\displaystyle C_nH_{2n+1}}{\underset{|}{CH}}-CH_2\right)_m R^1$$

oder

$$\left[R\left(O-\underset{\displaystyle C_nH_{2n+1}}{\underset{|}{CH}}-CH_2\right)_m O\right] x A$$

aufweist, worin

n den Wert 0 oder 1 hat,

m eine positive ganze Zahl bedeutet,

x die Anzahl der nicht abgesättigten Valenzen in A bedeutet,

A die Bedeutung $ROCH_2CHORCH_2-$, $-CH_2CHORCH_2-$, $-CH_2CHCH_2-$, $-CH_2C(CH_2OR)_3$, $(-CH_2)_2C(CH_2OR)_2$, $(-CH_2)_3CCH_2OR$, $(-CH_2)_4C$, $-CH_2(CHOR)_yCH_2OR$, $-CH_2(CHOR)_yCH_2-$ oder $-CH_2(CHOR)_{y-z}(-CH)_zCH_2-$ hat, wobei y den Wert 2, 3 oder 4 und z den Wert 0, 1, 2, 3 oder 4 hat, aber nicht größer als y ist,

R ein Wasserstoffatom, einen $C_{1-8}$-Alkylrest, einen $C_{7-15}$-Aralkyl- oder -Alkarylrest bedeutet oder die Bedeutung

$$R^2\underset{\underset{\displaystyle O}{\|}}{C}- \qquad R^2SO_2- \qquad \text{oder} \qquad R^2O\underset{\underset{\displaystyle O}{\|}}{C}-$$

hat und $R^1$ die Bedeutung $-OH$, $-OR^2$, $-SR^2$, $-NHR^2$, $-NR^2(C_{1-8}\text{-Alkyl})$, $-NR^2-(C_{7-15}\text{-Aralkyl oder -Alkaryl})$,

$$O\underset{\underset{\displaystyle O}{\|}}{C}R^2 \qquad -OSO_2R^2 \qquad -O\underset{\underset{\displaystyle O}{\|}}{C}OR^2$$

$-NH(Phenyl)$
oder $-NH(Naphthyl)$ hat, wobei $R^2$ einen $C_{1-8}$-Alkylrest, einen $C_{5-10}$-Cycloalkylrest, einen $C_{7-15}$-Aralkyl- oder -Alkarylrest, einen $C_6$-Arylrest, einen $C_{10}$-Arylrest oder den Furfurylrest bedeutet,

mit der Maßgabe, daß in irgendeiner Verfahrensstufe das Innere der gequollenen Cellulosefasern mit einer Lösung des Farbstoffs in dem gegebenenfalls wäßrigen Lösungsmittel (3) in Berührung gebracht wird, wobei ein etwaiger Färbevorgang von im Gemisch mit Cellulosefasern vorliegenden synthetischen Fasern in an sich bekannter Weise unter Erhitzen auf eine Temperatur nicht über etwa 225° C vorgenommen wird.

Es wurde nun gefunden, daß man gemäß dem Verfahren der DE-PS 1 811 796 cellulosehaltiges Textilmaterial sehr gut färben und bedrucken kann, wenn man als Farbstoffe Verbindungen der allgemeinen Formel I

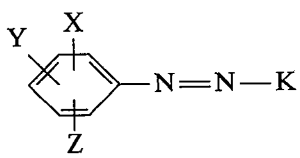

verwendet, in der

| | |
|---|---|
| K | der Rest einer Kupplungskomponente der Pyridonreihe, einer der Reste |
| X, Y und Z | eine Carbon-alkyl-Estergruppe mit 10 bis 18 C-Atomen im Alkylrest und die restlichen Substituenten |
| X, Y und Z | Wasserstoff, Methyl, Chlor, Brom oder Nitro sind. |

Die Kupplungskomponenten der allgemeinen Formel KH entsprechen vorzugsweise der Formel II

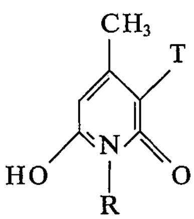

wobei

| | |
|---|---|
| R | Wasserstoff, $C_1$- bis $C_{10}$-Alkyl, Allyl, durch $C_1$- bis $C_4$-Alkoxy, Phenoxy, Phenoxyäthoxy oder gegebenenfalls substituiertes Phenyl substituiertes $C_1$- bis $C_4$-Alkyl, $C_6-C_{12}$-Polyalkoxyalkyl, Phenyl, Cyclohexyl oder Norbornyl und |
| T | Wasserstoff, Cyan, Carbamoyl oder Acetyl bedeuten. |

Als Carbonestergruppen kommen z. B. in Betracht:

$COOC_{10}H_{21}$, $COOC_{12}H_{25}$, $COOC_{16}H_{33}$ oder $COOC_{18}H_{37}$.

Reste R sind neben den bereits genannten im einzelnen beispielsweise:

$CH_3$ $C_2H_5$ $C_2H_4CN$ $C_3H_7$ $C_4H_9$ $CH_2CH(CH_3)_2$ $C_6H_{13}$

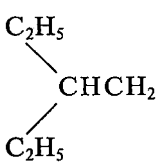 $C_6H_5$ $C_6H_4CH_3$ $C_6H_4OCH_3$ 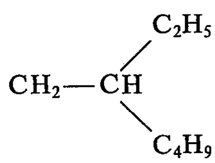

$C_{10}H_{21}$ 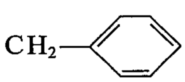 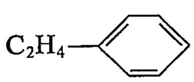 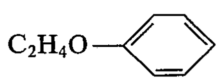 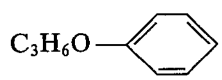

$C_2H_4OCH_3$ $C_2H_4OC_4H_9$ $C_3H_6OCH_3$ $C_3H_6OC_2H_5$ $C_3H_6OC_3H_7$

$C_3H_6OC_4H_9$ $C_3H_6OC_2H_4OC_6H_5$

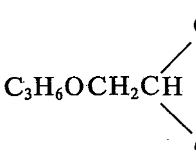 $C_3H_6OCH_2C_6H_5$ oder $C_3H_6OC_2H_4C_6H_5$

Die erfindungsgemäß verwendbaren Farbstoffe der allgemeinen Formel I werden erhalten, indem man ein Amin der allgemeinen Formel III

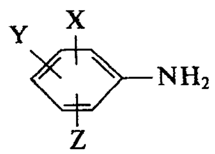

das frei von ionogenen Gruppen ist, diazotiert und mit Komponenten KH der allgemeinen Formel II in an sich bekannter Weise kuppelt, wobei X, Y, Z, R und T die angegebene Bedeutung haben.

Als Amine der Formel II kommen beispielsweise in Betracht:

2- oder 4-Aminobenzoesäure-decylester-(n) oder -(i) oder
2- oder 4-Aminobenzoesäure-oktadecylester,

deren Mono- und Dihalogenverbindungen sowie deren Nitro- und Nitro-halogenverbindungen, wie

2-Amino-3,5-dibrom-benzoesäure-decylester,
2-Amino-5-nitro-benzoesäure-decylester oder
2-Amino-3-brom-5-nitro-benzoesäure-decylester.

Bevorzugt für das erfindungsgemäße Verfahren sind Farbstoffe, die der Formel

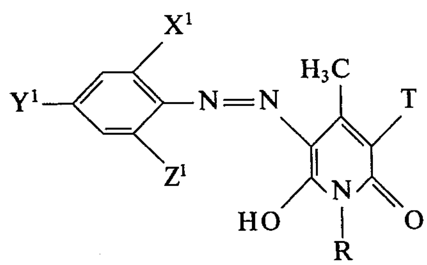

entsprechen, wobei R und T die angegebene Bedeutung haben und einer der Reste $X^1$ und $Y^1$ eine Carbon-alkyl-estergruppe und die restlichen Substituenten $X^1$, $Y^1$ und $Z^1$ Wasserstoff sind.

Als Verfahren zur Applikation der Farbstoffe der Formel I eignen sich insbesondere die in der deutschen Patentschrift 1 811 796 und den deutschen Offenlegungsschriften 2 524 243 und 2 528 743 sowie 2 855 188 angegebenen Verfahren. Einzelheiten der Applikation können den Beispielen entnommen werden, in denen sich Angaben über Teile und Prozente, sofern nicht anders vermerkt, auf das Gewicht beziehen.

Gegenüber dem in der GB-A-2 011 483, Beispiel 2, beschriebenen Farbstoff zeichnen sich die erfindungsgemäß zu verwendenden Farbstoffe beispielsweise durch eine viel bessere Waschechtheit aus. Bei der zu erwartenden Hydrolyseempfindlichkeit von Estergruppen ist diese Eigenschaft überraschend und nicht vorhersehbar.

## Beispiel 1

Ein Gewebe aus 65 Teilen Polyesterfaser und 35 Teilen mercerisierter Baumwolle wird mit einer Flotte imprägniert, die 80 g/l einer 20%igen, wäßrigen Zubereitung eines wasserunlöslichen, gelben Dispersionsfarbstoffes der Formel

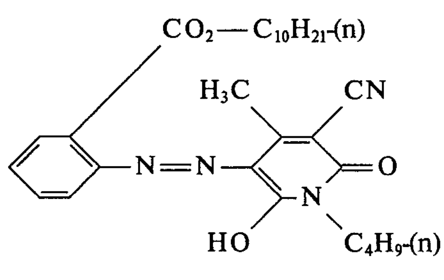

und 80 g/l eines Quell- und Farbstofflösemittels, bestehend aus 80 Teilen eines Polyäthylenglykols mit einem Molekulargewicht von 1500 und 20 Teilen eines Umsetzungsproduktes aus 1 Mol

Hexamethylendiamin und 15 Mol Äthylenoxid enthält. Der pH-Wert der Flotte wird mit Zitronensäure auf 6 eingestellt.

Das imprägnierte Gewebe wird 60 Sekunden bei 120°C getrocknet und zur Fixierung des Farbstoffes weitere 60 Sekunden einer Temperatur von 215°C ausgesetzt.

Danach wird kalt und warm gespült und 20 Minuten bei 100°C in Gegenwart eines handelsüblichen Waschmittels geseift.

Man erhält eine grünstichig gelbe Färbung mit guten Licht-, Wasch- und Reibechtheiten.

Beispiel 2

Man bedruckt ein Mischgewebe aus Polyester/Baumwolle mit einer Zubereitung, die aus 10 Teilen des Farbstoffes aus Beispiel 1, 100 Teilen des Umsetzungsproduktes aus Polyäthylenoxid vom Molekulargewicht 300 mit Borsäure im Molverhältnis 3 : 1, 30 Teilen Ölsäurediäthanolamid und 860 Teilen einer 3%igen Alginatverdickung besteht und trocknet den Druck bei 110°C. Darauf behandelt man 5 Minuten bei 185°C mit Heißdampf, spült kalt und seift bei 100°C mit einem handelsüblichen Waschmittel. Man erhält einen licht-, wasch- und lösungsmittelechten grünstichig gelben Druck auf weißem Fond.

Beispiel 3

Man bedruckt ein Mischgewebe aus Polyester/Baumwolle (65 : 35) mit einer Paste, die aus 20 Teilen des Farbstoffes

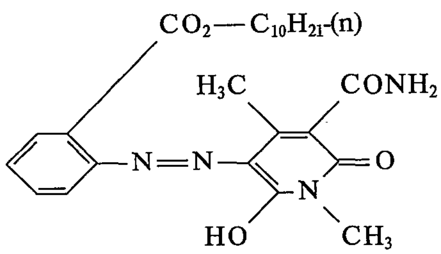

110 Teilen Polyäthylenoxid vom Molekulargewicht 350, 30 Teilen Ölsäurediäthanolamid und 840 Teilen einer 10%igen Alginatverdickung besteht. Man trocknet das bedruckte Material bei 100°C und fixiert danach in 60 Sekunden mit Heißluft bei 190/215°C. Der Druck wird sodann kalt und warm gespült und bei 100°C mit einem handelsüblichen Waschmittel geseift. Man erhält einen sehr grünstichigen, gelben Druck auf weißem Fond mit guten Echtheiten.

Beispiel 4

Ein Gewebe aus 67 Teilen Polyesterfaser und 33 Teilen Baumwolle (mercerisiert) wurde mit einer Flotte imprägniert, die 100 g/l einer Mischung aus 80 Teilen eines Borsäureesters von Polyäthylenglykol (Molgewicht etwa 800) im Molverhältnis 1 : 3 und 20 Teilen Äthylendiamin, umgesetzt mit 35 Mol Äthylenoxid, enthielt. Die Flottenaufnahme betrug 80%. Anschließend wurde 15 Minuten bei 60 bis 70°C getrocknet.

Auf das Substrat wurde folgende Druckpaste gedruckt:

500 Teile wäßrige Stärkeäther-Verdickung (10%),
2 Teile Zitronensäure,
10 Teile m-nitrobenzolsulfonsaures Natrium,
50 Teile des Farbstoffes

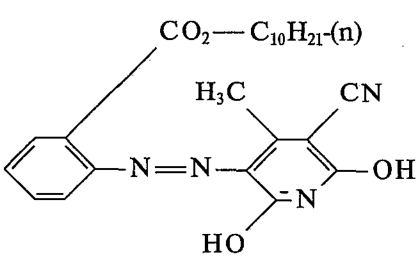

und 438 Teile Wasser.

Der Druck wurde 2 Minuten bei 130° C getrocknet und 90 Sekunden bei 210° C mit Heißluft behandelt. Nach dem Spülen wird ein grünstichig gelber Druck auf weißem Fond erhalten.

## Beispiel 5

Ein Gewebe aus 65 Teilen Polyester-Fasern und 35 Teilen mercerisierter Baumwolle wird mit einer Färbeflotte imprägniert, die 20 g/l einer 20%igen Zubereitung des Farbstoffs der Formel

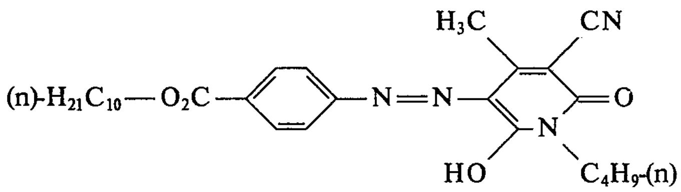

und als Quell- und Farbstofflösungsmittel 60 g/l einer Mischung aus 1 Teil eines Umsetzungsproduktes aus 1 Mol i-Octylphenol und 14 Mol Äthylenoxid und 2 Teilen eines Umsetzungsproduktes aus 1 Mol Piperazin und 16 Mol Äthylenoxid enthält. Der pH-Wert der Flotte wurde mit Glutarsäure auf 6 eingestellt. Das Gewebe wird 60 Sek. bei 120° C getrocknet und anschließend der Farbstoff 30 Sek. bei 225° C fixiert. Dann wird kalt und warm gespült und bei 100° C in Gegenwart eines handelsüblichen Waschmittels gewaschen. Man erhält eine brillante gelbe Färbung mit guten Wasch- und Lichtechtheiten.

Analog erhält man mit den im folgenden durch Angabe der Substituenten gekennzeichneten Farbstoffen Drucke im angegebenen Farbton, die sich in der Regel durch gute Echtheiten auszeichnen.

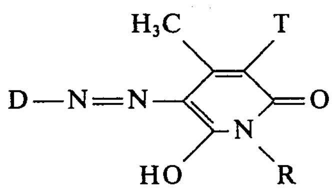

| Bsp. | D | T | R | Farbton auf PES/BW |
|---|---|---|---|---|
| 6 | 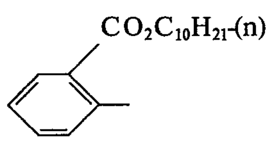 | CN | $C_3H_7$ | grünst. gelb |
| 7 | desgl. | CN | $C_2H_4OCH_3$ | desgl. |
| 8 | desgl. | CN | $C_6H_{13}$-n | desgl. |
| 9 | desgl. | CN | $CH_2\overset{C_2H_5}{\overset{\vert}{C}H}-C_4H_9$ | desgl. |
| 10 | desgl. | $CONH_2$ | $CH_3$ | desgl. |
| 11 | desgl. | $CONH_2$ | $C_4H_9$-(n) | desgl. |
| 12 | desgl. | $CONH_2$ | $CH_2-\overset{C_2H_5}{\overset{\vert}{C}H}-C_4H_9$ | desgl. |
| 13 | desgl. | $CONH_2$ | H | desgl. |

Fortsetzung

| Bsp. | D | T | R | Farbton auf PES/BW |
|---|---|---|---|---|
| 14 | 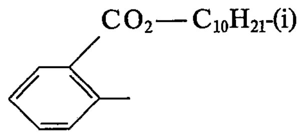 | CN | $C_4H_9$-(n) | grünst. gelb |
| 15 | desgl. | CN | $CH_3$ | desgl. |
| 16 | desgl. | CN | $C_2H_4OCH_3$ | desgl. |
| 17 | 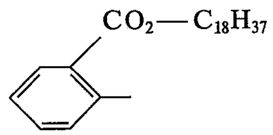 | CN | H | desgl. |
| 18 | desgl. | CN | $CH_3$ | desgl. |
| 19 | desgl. | $CONH_2$ | H | desgl. |
| 20 | desgl. | CN | $C_4H_9$-(n) | desgl. |
| 21 | desgl. | $CONH_2$ | $C_4H_9$-(n) | desgl. |
| 22 | desgl. | $COCH_3$ | $C_4H_9$-(n) | desgl. |
| 23 | 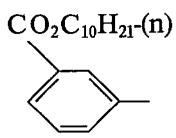 | CN | $C_4H_9$-(n) | desgl. |
| 24 | 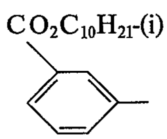 | CN | $C_4H_9$-(n) | desgl. |
| 25 | 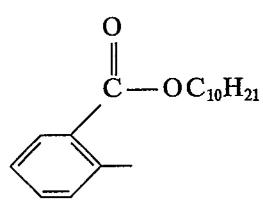 | CN | $CH_2CH{=}CH_2$ | desgl. |

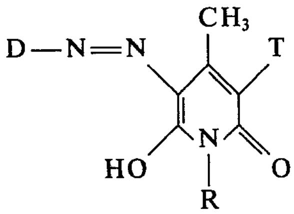

| Bsp. | D | T | R | |
|---|---|---|---|---|
| 26 | 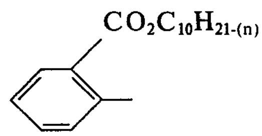 | CN | $C_{10}H_{21\text{-}(n)}$ | grünst. gelb |
| 27 | desgl. | CN | $C_{12}H_{25}$ | desgl. |
| 28 | 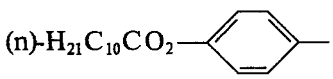 | CN | $C_{12}H_{25}$ | desgl. |
| 29 | desgl. | $CONH_2$ | $C_{12}H_{25}$ | desgl. |
| 30 | desgl. | CN | $C_9H_{19}$, $C_{10}H_{21}$, $C_{11}H_{23}$ 1 : 1 : 1 | desgl. |

**Patentansprüche**

1. Verfahren gemäß der DE-C-1 811 796 zum Färben und Bedrucken von cellulosehaltigem Textilmaterial, dadurch gekennzeichnet, daß man als Farbstoffe Verbindungen der allgemeinen Formel I

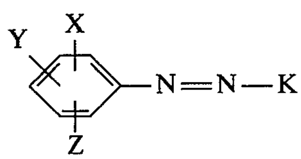

verwendet, in der

| | |
|---|---|
| K | der Rest einer Kupplungskomponente der Pyridonreihe, einer der Reste |
| X, Y und Z | eine Carbon-alkyl-estergruppe mit 10 bis 18 C-Atomen im Alkylrest und die restlichen Substituenten |
| X, Y und Z | Wasserstoff, Methyl, Chlor, Brom oder Nitro sind. |

2. Verfahren gemäß Anspruch 1, dadurch gekennzeichnet, daß man Farbstoffe verwendet, bei denen K ein Rest der Formel

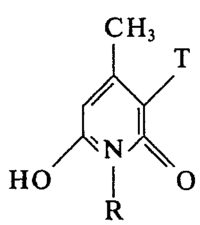

ist, in der

R Wasserstoff, $C_1$- bis $C_{10}$-Alkyl, Allyl, durch $C_1$- bis $C_4$-Alkoxy, Phenoxy, Phenoxyäthoxy oder gegebenenfalls substituiertes Phenyl substituiertes $C_1$- bis $C_4$-Alkyl, $C_6$- bis $C_{12}$-Polyalkoxyalkyl, Phenyl, Cyclohexyl oder Norbornyl und

T  Wasserstoff, Cyan, Carbamoyl oder Acetyl bedeuten.

3. Verfahren gemäß Anspruch 1, dadurch gekennzeichnet, daß man Farbstoffe verwendet, die der Formel

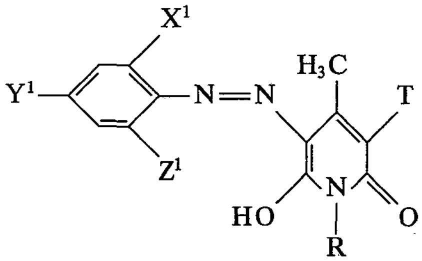

entsprechen, wobei R und T die angegebene Bedeutung haben, einer der Reste $X^1$ und $Y^1$ eine Carbon-alkyl-estergruppe mit insgesamt 11 bis 19 C-Atomen und die restlichen Substituenten $X^1$, $Y^1$ und $Z^1$ Wasserstoff sind.

4. Verfahren gemäß Anspruch 1, dadurch gekennzeichnet, daß man als Farbstoffe Verbindungen der Formel

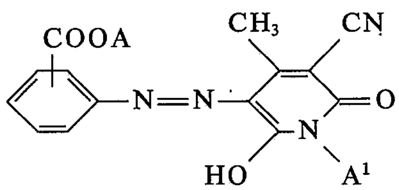

verwendet, in der

A  $C_{10}$- bis $C_{18}$-Alkyl und

A  $C_1$- bis $C_{18}$-Alkyl oder -Alkenyl, durch $C_1$- bis $C_4$-Alkoxy, Phenoxy, Phenoxyäthoxy oder Phenyl substituiertes $C_1$- bis $C_3$-Alkyl, $C_5$- bis $C_{12}$-Polyalkoxyalkyl, gegebenenfalls substituiertes Phenyl oder Cyclohexyl sind.

**Claims**

1. A process according to German Patent 1 811 716 for dyeing and printing cellulose-containing textile material, wherein the dye used is a compound of the general formula I

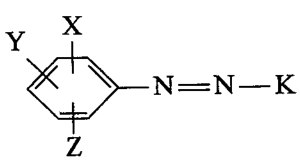

where
K is the radical of a coupling component of the pyridone series,
one of the radicals X, Y and Z is a carboxylic acid alkyl ester group, where alkyl is of 10 to 18 carbon atoms, and
the remaining substituents X, Y and Z are hydrogen, methyl, chlorine, bromine or nitro.

2. A process as claimed in claim 1, wherein K in the dye used is a radical of the formula

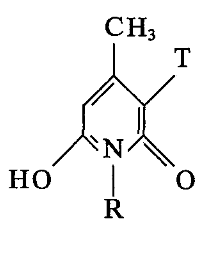

where

R  is hydrogen, $C_1-C_{10}$-alkyl, allyl, $C_1-C_4$-alkyl which is substituted by $C_1-C_4$-alkoxy, by phenoxy,

by phenoxyethoxy or by phenyl (which is itself unsubstituted or substituted), $C_6-C_{12}$-polyalkoxyalkyl, phenyl, cyclohexyl or norbornyl, and

T is hydrogen, cyano, carbamyl or acetyl.

3. A process as claimed in claim 1, wherein the dye used has the formula

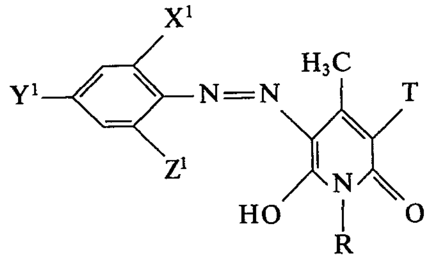

where R and T have the stated meanings, one of $X^1$ and $Y^1$ is a carboxylic acid alkyl ester group of a total of 11 to 19 carbon atoms, and the remaining substituents, $X^1$, $Y^1$ and $Z^1$, are hydrogen.

4. A process as claimed in claim 1, wherein the dye used is a compound of the formula

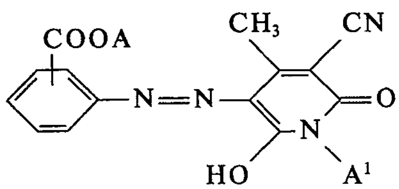

where

A is $C_{10}-C_{18}$-alkyl, and

$A^1$ is $C_1-C_{18}$-alkyl, $C_1-C_{18}$-alkenyl, $C_1-C_3$-alkyl which is substituted by $C_1-C_4$-alkoxy, by phenoxy, by phenoxyethoxy or by phenyl, $C_5-C_{12}$-polyalkoxyalkyl, unsubstituted or substituted phenyl, or cyclohexyl.

**Revendications**

1. Procédé selon le brevet DE-C-1 811 796 pour la teinture et l'impression de matières textiles cellulosiques, caractérisé en ce qu'on utilise, comme colorants, des composés de formule générale I

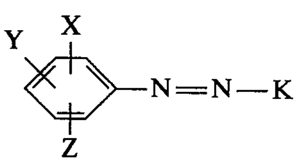

dans laquelle

K est le radical d'un constituant de copulation de la série des pyridones, l'un des radicaux X, Y et Z est un groupe ester alcoylique d'acide carboxylique avec 10 à 18 atomes de C dans le radical alcoyle et les autres substituants

X, Y et Z représentent chacun un hydrogène, un méthyle, un chlore, un brome ou un nitro.

2. Procédé selon la revendication 1, caractérisé en ce qu'on utilise des colorants dans lesquels K est un radical de formule

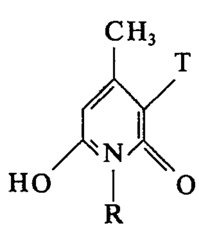

dans laquelle

R représente un hydrogène, un alcoyle en $C_1$ à $C_{10}$, un allyle, un alcoyle en $C_1$ à $C_4$ substitué par un alcoxy en $C_1$ à $C_4$, un phénoxy, un phénoxyéthoxy ou un phényle éventuellement substitué, un polyalcoxyalcoyle en $C_6$ à $C_{12}$, un phényle, un cyclohexyle ou un norbornyle et

T représente un hydrogène, un cyano, un carbamoyle ou un acétyle.

3. Procédé selon la revendication 1, caractérisé en ce qu'on utilise des colorants qui répondent à la formule

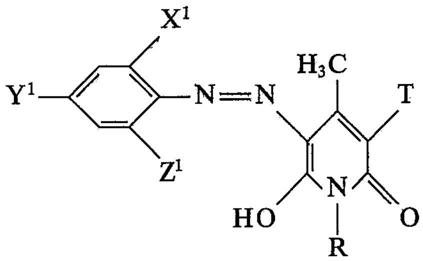

dans laquelle R et T ont les significations indiquées, l'un des radicaux $X^1$ et $Y^1$ est un groupe ester alcoylique d'acide carboxylique contenant au total 11 à 19 atomes de C et les autres substituants $X^1$, $Y^1$ et $Z^1$ sont des atomes d'hydrogène.

4. Procédé selon la revendication 1, caractérisé en ce qu'on utilise, comme colorants, des composés de formule

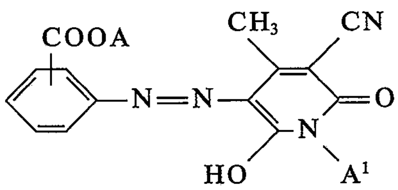

dans laquelle

A est un alcoyle en $C_{10}$ à $C_{18}$ et

$A^1$ est un alcoyle ou alcényle en $C_1$ à $C_{18}$, un alcoyle en $C_1$ à $C_3$ substitué par un alcoxy en $C_1$ à $C_4$, un phénoxy, un phénoxyéthoxy ou un phényle, un polyalcoxyalcoyle en $C_5$ à $C_{12}$, un phényle éventuellement substitué ou un cyclohexyle.